# EUROPEAN PATENT APPLICATION

(11) **EP 4 550 137 A1**
(43) Date of publication of application: **07.05.2025**
(21) Application number: 24163880.8
(22) Date of filing: 15.03.2024
(51) Int. Cl.: G06F 9/48

(54) **VEHICLE, APPARATUS, DATA CARRIER, COMPUTER PROGRAM, AND METHOD FOR EXECUTING A SAFETY-CRITICAL-FUNCTION AND A NON-SAFETY-CRITICAL FUNCTION BY A DATA PROCESSING CIRCUIT**

(30) Priority: 03.11.2023 EP 23207655
(71) Applicant: Elektrobit Automotive GmbH, 91058 Erlangen (DE)
(72) Inventor: Ziehensack, Michael, 1070 Wien (AT); Holzer, Martin, 1070 Wien (AT); Hodits, Gerald, 1070 Wien (AT); Reisinger, Johannes, 1070 Wien (AT)
(74) Representative: Continental Corporation

(57) **Abstract**

Embodiments of the present disclosure relate to a vehicle, an apparatus, a data carrier, a computer program, and a method for executing a safety-critical function and a non-safety-critical function by a data processing circuit. The method comprises executing the non-safety-critical function using dedicated first software resources and/or dedicated first hardware resources and executing the safety-critical-function using dedicated second software resources and/or dedicated second hardware resources.

## Description

Embodiments of the present disclosure relate to a vehicle, an apparatus, a data carrier, a computer program, and a method for executing a safety-critical function and a non-safety-critical function by a data processing circuit. In particular but not exclusively, embodiments relate to a concept for an x-by-wire system for a vehicle.

With the automation, electrification, and communication of vehicles, safety-critical software plays an increasingly important role. However, safety-critical software may require special protection from malfunctions and/or malicious attacks which comes along with a number of drawbacks:
- High development and qualification costs (considering that only very few functions, e.g., few messages are critical).
- Each change, even of non-safety-critical functions (for automotive applications also referred to herein as "quality-managed" (QM) functions) may require full renewed qualification.
- Existing concepts are not scalable for complex systems (excessive/exponential qualification effort considering the number of features, lines of code, configuration space/variance, interdependencies, etc.).
- Undesirable trade-off between resources and complexity: higher resource consumption and complex management (e.g., management of shared buffers instead of dedicated buffers).

Hence, there may be a demand for an improved concept for a data processing circuit executing a safety-critical function and a non-safety-critical function (or multiple or each of them).

This demand may be satisfied by the subject-matter of the present disclosure.

Embodiments of the present disclosure provide a method for executing a safety-critical-function and a non-safety-critical function by a data processing circuit. The method comprises executing the non-safety-critical function using dedicated first software resources and/or dedicated first hardware resources and executing the safety-critical-function using dedicated second software resources and/or dedicated second hardware resources. In this way, undesired interferences (spatial and/or temporal interference) of safety-critical functions may be avoided. At the same time, the qualification effort for safety-critical software may be reduced. As well, the proposed approach may make software including safety-critical functions scalable for complex systems and may avoid an undesirable trade-off between resources and complexity.

In some embodiments, the non-safety-critical function is a first sub-function of a superordinate function, and the safety-critical function is a second sub-function of the same superordinate function, and wherein the first sub-function processes non-safety-critical data and the second sub-function processes safety-critical data. So, the first dedicated software and/or hardware resources are reserved for/dedicated to the first sub-function and the second dedicated software and/or hardware resources are reserved for/dedicated to the second sub-function to avoid interferences between the non-safety-critical function and the safety-critical function. In this way, a safety-critical part of the superordinate function may be reduced compared to approaches where the entire function including a safety-critical portion and/or a non-safety-critical portion is considered and/or qualified as safety-critical. So, compared to such "integral" approaches, the complexity of the safety-critical part (i.e., the second sub-function) dedicated software and/or hardware resources required for the safety-critical function may be reduced.

In practice, the dedicated second software resources may comprise a dedicated software or software stack for the safety-critical-function and the dedicated second hardware resources may comprise one or more dedicated processing resources of one or more processing cores, and/or one or more dedicated communication controller resources, and/or one or more dedicated memory resources. So, the skilled person will appreciate that the separation between the safety-critical function and the non-safety-critical function may be hardware-based and/or software-based. For example, the safety-critical function and the non-safety-critical function may use separate respective physical and/or virtual memory storages/buffers.

According to some embodiments it is suggested that separate dedicated operation modes are used for the safety-critical function and the non-safety-critical function to avoid interferences of the functions.

For example, in some embodiments, the method further comprises switching between a normal mode (where the non-safety-critical function may be executed) and a high reliability mode where the execution of the safety-critical function is protected against unacceptable interruption when it is executed in the high-reliability mode. In this way, it may be ensured that the safety-critical function is executed within a desired period of time (and not delayed more than acceptable through interruptions).

Some embodiments of the present disclosure are based on the finding that even safety-critical functions may include non-safety-critical parts. Still, in other approaches such non-safety-critical parts are integrated together with safety-critical parts. Accordingly, implementations of such safety-critical functions are more complex, and the non-safety-critical parts consume hardware and/or software resources dedicated to safety-critical software.

So, one idea of the present disclosure is - alternatively, or in addition to the separation of a superordinate function - to split the safety-critical function into sub-functions (during its development) for a safety-critical part and a non-safety-critical part.

For example, the safety-critical function is separated into a first non-safety-critical sub-function for preparation and/or configuration, and a second safety-critical sub-function for execution in high reliability mode. In such embodiments, the method further comprises executing the first sub-function for generation of an input for the second sub-function, checking if the input to be used for the second sub-function is valid, and switching into high-reliability mode if the input is valid. Then, the second sub-function is executed in the high-reliability mode using the input.

In this way, the complexity of the safety-critical part and, thus, hardware and/or software resources used for the safety-critical part may be reduced.

In some embodiments, the valid (validated) input is locked to avoid any manipulation of the input after its validation.

The skilled person will appreciate that the proposed approach may be applied in various applications where safety-critical functions are desired or implemented. In particular, embodiments of the proposed approach may be deployed in automotive applications.

For example, the data processing circuit is configured for the use in a control circuit for a vehicle. In practice, the control circuit may correspond to or comprise an electronic control unit (ECU) for a vehicle.

It is noted that, in context of the present disclosure, the term "vehicle" is to be understood broadly. So, examples of the vehicle may include any transportation device/apparatus such as a car, a track, a bus, a motorcycle, a boat, an aircraft, and/or the like.

In some embodiments, the data processing circuit is configured for the use in an engine control system and/or an x-by-wire system. The engine control system may be configured for controlling a propulsion engine (e.g., an electric machine and/or an internal combustion engine). In the term "x-by-wire system", the "x" is to be understood as placeholder for an arbitrary function controlled electronically. In practice, the proposed approach, for example, may be applied for a brake-by-wire system or a steer-by-wire system.

The suggested approach may be implemented as a computer-implemented method. In practice, the proposed method, e.g., is implemented in a computer program.

So, further approaches provide a computer program comprising instructions which, when the computer program is executed by a computer, cause the computer to carry out an embodiment of the proposed method.

Such a computer program may be stored on various data carriers.

Accordingly, embodiments may provide a computer-readable data carrier having stored thereon the proposed computer program.

Further embodiments provide an apparatus comprising one or more interfaces for communication and a data processing circuit configured to execute an embodiment of the proposed method.

For the aforementioned hardware-based separation, the one or more interfaces and/or data processing circuit may comprise dedicated hardware resources for a safety-critical-function.

For example, the interfaces comprise one or more dedicated interfaces for the safety-critical-function, and/or the data processing circuit, for example, comprises one or more dedicated processing cores, buffers, and/or memory devices for the safety-critical-function.

As mentioned above, the suggested approach may be deployed in automotive applications. Accordingly, embodiments may provide a vehicle comprising an embodiment of the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for executing a safety-critical-function and a non-safety-critical function by a data processing circuit;
Fig. 2 schematically illustrates how functions may be split into separate sub-functions;
Fig. 3 shows a block diagram schematically illustrating an embodiment of an apparatus according to the proposed approach; and
Fig. 4 shows an exemplary architecture for the proposed approach.

Interference between safety-critical and non-safety-critical software refers to situations where the operation or malfunction of non-safety-critical software impacts the performance or safety of safety-critical software. Safety-critical software is designed to ensure the safe operation of systems in sectors such as aviation, automotive, medical devices, and nuclear power plants, where failure could result in high damage.

In complex systems, safety-critical software often interacts with non-safety-critical software components, such as user interfaces, diagnostic tools, or ancillary systems. However, these interactions can introduce risks if not managed properly. For example, a bug or malfunction in non-safety-critical software might overload system resources, causing delays, or failures in safety-critical tasks. Similarly, interference could occur if non-safety-critical software competes for shared resources, causing unpredictable behavior or compromising the integrity of safety-critical functions.

The present disclosure provides a solution/an approach to avoid such interferences.

Details of the proposed approach are described below with reference to the appended drawings.

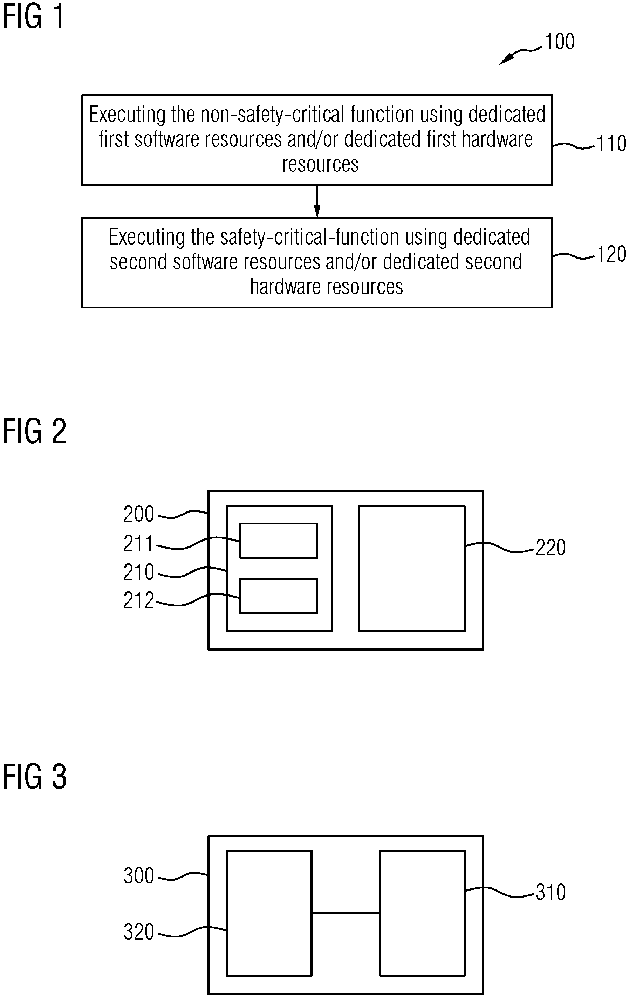

Fig. 1 shows a flow chart schematically illustrating an embodiment of a method 100 for executing a safety-critical function and a non-safety-critical function by a data processing circuit. In other words, method 100 relates to applications where one or more safety-critical and/or non-safety-critical functions are executed by the same data processing circuit. In practice, the functions may be executed by the same computer or computing device.

In context of the present disclosure, the term "function" is to be understood broadly. So, examples of the functions may be not only building blocks of software but, generally, any kind of functionality, purpose, and/or task which can be executed by the data processing circuit. In practice, examples of the functions include one or more communication functions, diagnostic functions, and/or control functions.

The non-safety-critical function can be understood as any function which is not safety-relevant. So, the non-safety-critical function may be any function which does not impact the safety of the application, e.g., such that the safety is not reduced when the non-safety-critical function fails or when the non-safety-critical function is not implemented. In some implementations, non-safety-critical function, e.g., is (only) for entertainment purposes.

On the other hand, the safety-critical function may be any kind of function which provides safety. In other words, the safety-critical function may be any kind of function which impacts the safety of the application, e.g., such that the safety is reduced when the safety-critical function fails or when the safety-critical function is not implemented. In practice, the safety-critical function, e.g., is for safety-relevant communication and/or control operations.

In automotive applications, the non-safety-critical function may correspond to an optional function for an infotainment system of a vehicle. In contrast, the safety-critical function may be essential for a safety-related function of the vehicle, e.g., for a brake-by-wire, steer-by-wire, or any other x-by-wire system.

With reference to Automotive Safety Integrity Levels (ASIL), the non-safety-critical function, e.g., is a Quality Management (QM) function and the safety-critical function is a ASIL A, ASIL B, ASIL C, or ASIL D function.

As the skilled person will understand, competing for hardware and/or software resources, safety-critical functions and non-safety-critical functions may interfere with each other. However, spatial and/or temporal interferences of safety-critical functions may be undesired or inacceptable to avoid dangerous situations.

Therefore, the proposed approach suggests executing 110 the non-safety-critical function using dedicated first software resources and/or dedicated first hardware resources and executing 120 the safety-critical-function using dedicated second software resources and/or dedicated second hardware resources.

In this way, interferences of the functions may be avoided or at least reduced. So, the proposed approach may lead to more safety where it is applied.

For the proposed approach to avoid spatial and/or temporal interference, various software- and/or hardware-implemented measures may be taken. In practice, e.g., separate memory regions or processing resources of one or more processing cores may be allocated to the safety-critical function or the non-safety-critical function. In doing so, hardware features like virtual memory or a memory protection mechanism may be used to isolate memory region accessed by the different functions. Optionally, containerization and/or virtualization techniques may be deployed to isolate environments of the different functions.

In embodiments, the dedicated second software resources comprise a dedicated software or software stack for the safety-critical-function, and wherein the dedicated second hardware resources comprise one or more dedicated processing resources of one or more processing cores, and/or one or more dedicated communication controller resources, and/or one or more dedicated memory resources.

A skilled person will understand that the proposed hardware and/or software limitations may limit the performance, e.g., because parallel computing may be prohibited. But as the skilled person will appreciate, the proposed approach allows to reduce the complexity of software using or requiring dedicated hardware resources and/or software resources.

For example, in some embodiments, a superordinate function is to be executed. In practice the superordinate function may comprise one or more sub- functions which are safety-critical and one or more sub-functions which are non-safety-critical. According to the proposed approach, the superordinate function may be split into safety-critical parts/functions. In such embodiments, e.g., the non-safety-critical function is a first sub-function of the superordinate function, and the safety-critical function is a second sub-function of the same superordinate function. The first sub-function processes non-safety-critical data and the second sub-function processes safety-critical data.

The superordinate function, e.g., is "sending a message". However, the superordinate function may be configured to send non-safety-critical messages (as a first sub-function) as well as safety-critical messages (as a second sub-function). According to other approaches, the superordinate function may consume hardware resources and/or software resources for safety-critical functions even if a non-safety-critical message is sent. In doing so, excessive hardware resources and/or software resources for safety-critical functions are required.

In contrast, the proposed approach suggests, that respective dedicated hardware resources and/or software resources are used for a respective sub-function of the superordinate function. Referring to the above example, sending safety-critical messages (second sub-function) utilizes hardware resources and/or software resources dedicated to safety-critical functions, while sending non-safety-critical messages (first sub-function) utilizes hardware resources and/or software resources allocated to the non-safety-critical functions. In this way, performance limitations may be reduced.

In some applications, the suggested approach may be applied such that the safety-critical sub-function is reduced as much as possible, i.e., to the absolute minimum (of code or computational effort for execution thereof), to minimize the performance limitation.

For temporal separation, the execution of the functions may be scheduled such that they do not overlap in time when accessing shared resources. For this proper synchronization mechanisms may be applied. In particular, scheduling algorithms may be used which prioritize the safety-critical function to ensure that it is executed in due time.

In particular, the proposed approach suggests a temporally separated execution of the functions using at least two temporal modes. This way, a temporally split is achieved.

For example, a high reliability mode (also referred to herein as "critical mode", cM) and a so-called "normal mode" (nM) (e.g., startup, shutdown) may be applied. The high reliability mode may ensure that functions executed in the high reliability mode are not interrupted (for too long, e.g., for more than a predefined period of time).

To this end, the method 100 may comprise switching between a normal mode (e.g., for the non-safety-critical function) and a high reliability mode (e.g., for the safety-critical function). In doing so, the execution of the safety-critical-function is protected against unacceptable interruption when it is executed in the high-reliability mode. In this way, inacceptable delays of the safety-critical function may be avoided.

So, e.g., in the high reliability mode, a protection mechanism against unintended service interruption may be applied. An unintended service interruption, e.g., is the usage of a service interface which would result in an interruption of the execution of the safety-critical function during high reliability mode, e.g. calling a communication transceiver driver to stop communication during high reliability mode (where communication is a safety-critical function). Any service providing a service interface that might directly result in an unintended service interruption need to lock related service interfaces during high reliability mode by blocking such requests.

The dedicated hardware resources for the safety-critical function (also referred to herein as "critical hardware", cHW) may comprise guaranteed or reserved central processing unit (CPU) time on one or multiple processing cores, dedicated (physical) memory, dedicated buffers (e.g., for communication), exclusive control of critical IO hardware such as communication controller and transceiver. The dedicated hardware resources can either be provided via dedicated physical resources or shared physical resources with protection measures in hardware (HW) and/or software (SW) such as a memory protection unit, task priorities with a strict priority scheduler, and/or execution time budget enforcement.

A skilled person will understand that an application performance may be reduced in the high reliability mode, e.g., because no parallel execution of other functions sharing the same resources is allowed. However, according to the proposed separation or split of safety-critical and non-safety-critical parts, the use of the high reliability mode can be reduced (to a minimum) in order to reduce performance limitations.

In some applications, the safety-critical (sub-) function may include one or more sub-functions which are safety-critical and non-safety-critical. Accordingly, it is proposed that the safety-critical function is separated into a first non-safety-critical (sub-) sub-function for preparation and/or configuration, and a second safety-critical (sub-) sub-function for execution in high reliability mode. In this way, the complexity of safety-critical software may be (further) reduced.

The first non-safety-critical sub-function, e.g., is configured to obtain input (required) for the second safety-critical sub-function, for example, for initialization or configuration of the second safety-critical sub-function.

Further, such applications of the method 100 may comprise checking if the input to be used for the second sub-function is valid, switching into high-reliability mode if the input is valid, and executing the second sub-function in the high-reliability mode using the input.

Referring to the above example, the safety-critical function, e.g., is "sending a safety-critical message". For this, an address (e.g., IP address) of a recipient of the message may be obtained and/or cryptographic keys may be exchanged with the recipient.

According to one idea of the proposed approach, such preparation, initialization, and/or completion measures, also referred to herein as "helper functions" or "non-safety-critical sub-functions", may be not safety-critical as such.

However, in other approaches, such helper functions may be executed together with "actual" safety-critical part/s of the safety-critical function (e.g., transmitting the safety-critical message) using the same software and/or hardware resources as for the safety-critical part/s. Hence, more software and/or hardware resources and/or more qualification effort may be necessary.

The proposed approach suggests a separation of a non-safety-critical sub-function and a safety-critical sub-function of the safety-critical function. Accordingly, dedicated separate software and/or hardware resources may be used for the execution of the non-safety-critical sub-function and the safety-critical sub-function.

In other words, embodiments provide a functional split including a separation of the safety-critical function into at least one critical function and one or more helper functions (normal functions that may be required before or after execution of critical functions such as for startup, shutdown, initialization, channel setup, key exchange). Apart from that, additional functions (normal functions not required for operation of the safety-critical function such as diagnostics) may be implemented.

So, as schematically visualized in Fig. 2, in practice, a safety-critical function 210, e.g., is separated into a first non-safety-critical sub-function 211 for preparation and/or configuration, and a second safety-critical sub-function 212 for execution in high reliability mode. In such embodiments, e.g., the first sub-function 211 may generate an input for the second sub-function 212. For sending a safety-critical message, the first sub-function 211 may include obtaining address information of a recipient of the message and/or exchanging a cryptographic key with the recipient. So, the first sub-function 211, e.g., includes or contributes to a handshake for communication. Accordingly, the input may comprise the address information and/or a cryptographic key. The second sub-function 212 may correspond to or comprise the (actual) transmission of the message, e.g., a generation of a (encrypted) communication signal/package and/or emission of such signal/package for transmitting the safety-critical message.

The proposed approach further suggests checking if the input to be used for the second sub-function 212 is valid. In doing so, the input may be checked for any inaccuracies, mistakes, and/or anomalies. Referring to the aforementioned use case, e.g., the address information of the recipient and or the cryptographic key may be validated. For this, the input may be compared with a predefined reference, e.g., reference address information and/or a reference cryptographic key.

In embodiments where a high-reliability mode is implemented, embodiments of the proposed approach may suggest switching into high-reliability mode if the input is valid and executing the second sub-function 212 in the high-reliability mode using the input. In this way, the amount of software and/or hardware resources for safety-critical parts and/or the qualification effort may be reduced.

So, the proposed approach may allow a separation of dedicated hardware and/or software resources with reduced or ideally minimal functional duplication.

Hence, the suggested approach may provide for a so-called "Online-Self-Test" to avoid safety allocation on helper-functions through entering the high reliability mode before helper-functions are executed. Then, services are locked, and the results of the helper-functions are validated by an online-self test. E.g., the address of a server is discovered by a service discovery component (helper-function) and will be used for a critical communication between client and server, after providing the server address to the client the update of the server address at the client is locked (to avoid subsequent manipulation or modification), the communication between, e.g., a server and a client is tested and in case of success a transition into the high reliability mode is approved. By means of this method no safety requirements are allocated directly to the helper functions - the result of these helper functions will be validated, thus it is out of scope how the result has been achieved (from a safety perspective).

A skilled person will appreciate, that the proposed approach may be applied to an arbitrary number of safety-critical functions.

The proposed approach may not only guarantee or allocate hardware and/or software resources for safety-critical functions and remaining hardware resources for normal functions (non-safety-critical functions) but also may provide a functional duplication/split (dedicated software for safety-critical functions). In doing so, separate software implementation of safety-critical functions may be reduced (ideally to the absolute minimum of the required functionality (critical software, (cSW)) and executed on cHW in the high reliability mode.

The skilled person will also appreciate that the suggested functional split allows a functional re-use, e.g., of the helper-function. This, e.g., allows to use commercial off the shelf (COTS) basic software (unqualified software or embedded system software) executed on nHW in normal mode for functions which are required for the execution of a safety-critical function but do not carry out the actual safety-critical part (e.g., actually transmitting a safety-critical message).

As well the functional re-use may apply for additional functions. In doing so, the COTS basic software (embedded system software) may be on nHWfor normal functions independent from the mode used.

As laid out before, the safety-critical function 210 may be a sub-function of a superordinate function 200. For example, the superordinate function 200 includes a first sub-function 220 which is non-safety-critical and a second sub-function 210 corresponding to the safety-critical function 210.

For the exemplary superordinate function "sending a message", the safety-critical function 210 corresponds to "sending a safety-critical message" and the sub-function 220 corresponds to "sending a non-safety-critical message".

In practice, the proposed approach may be applied in any data processing circuit executing safety-critical functions as well as non-safety-critical functions. The skilled person will appreciate, that the suggested solution may be not only applied in automotive applications but also any other applications in various fields of technology, e.g., medicine, information technology, etc.

In automotive applications, the data processing circuit, e.g., is configured for the use in a control circuit for a vehicle. In examples, the data processing circuit may be part of or include an electronic control unit (ECU) of a vehicle.

In particular, embodiments of the proposed approach may be useful in safety-critical applications. In automotive applications, the data processing circuit, e.g., is configured for the use in an engine control system and/or an x-by-wire system (brake-by-wire system, steer-by-wire system, and/or the like).

As outlined above, the proposed approach may be not only implemented in software but also in hardware. Accordingly, embodiments may relate to an apparatus specifically adapted in line with embodiments of the proposed approach.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

The hardware of the apparatus may be configured such that the one or more interfaces and/or data processing circuit comprise/s dedicated hardware resources for a safety-critical function. In practice, the interfaces comprise separate dedicated interfaces (e.g., separate dedicated Controller Area Network, CAN, interfaces) for the safety-critical function and the non-safety critical function. Alternatively, or additionally, the data processing circuit 320 may comprise a dedicated controller (e.g., dedicated CAN controllers) for the safety-critical function and the non-safety critical function.

Optionally, the data processing circuit comprises one or more dedicated processing cores, buffers, and/or memory devices for the safety-critical-function.

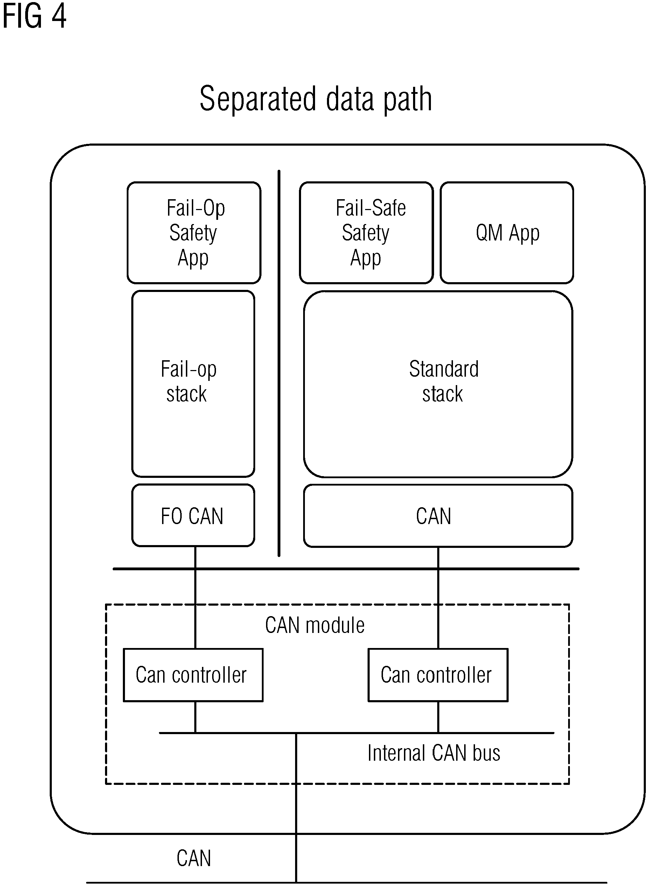

As visualized in Fig. 4, right block diagram, embodiments of the proposed approach provide a hardware- and software-based separation for separated data paths. In the embodiment of Fig. 4, for example, the safety-critical sub-function, referred to herein as "Fail-Operational (Op) Safety App", runs on a dedicated software stack, referred to herein as "Fail-Operational (Op) stack, and uses dedicated CAN interface ("Fail Operational (FO) CAN"). As well, a dedicated CAN controller is used for the safety-critical sub-function.

On the other hand, the non-safety-critical sub-function ("Fail Safe Safety App") as well as additional software ("QM Apps") run on another software stack ("standard stack") dedicated to the non-safety critical functions and use a separate CAN interface ("CAN"). As well, a separate CAN controller is used for them.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for executing a safety-critical-function (210) and a non-safety-critical function (220) by a data processing circuit (320), the method (100) comprising:
executing (110) the non-safety-critical function (220) using dedicated first software resources and/or dedicated first hardware resources; and
executing (120) the safety-critical-function (210) using dedicated second software resources and/or dedicated second hardware resources, wherein the non-safety-critical function (220) is a first sub-function of a safety-critical [see description, p. 3, par. 1] superordinate function (200), and the safety-critical function (210) is a second sub-function of the same superordinate function (200), and wherein the first sub-function (211) processes non-safety-critical data and the second sub-function (212) processes safety-critical data.

2. The method (100) of claim 1, wherein the dedicated second software resources comprise a dedicated software or software stack for the safety-critical-function (210), and wherein the dedicated second hardware resources comprise one or more dedicated processing resources of one or more processing cores, and/or one or more dedicated communication controller resources, and/or one or more dedicated memory resources.

3. The method (100) of any one of the preceding claims, wherein the method (100) further comprises switching between a normal mode and a high reliability mode, wherein the execution of the safety-critical-function (210) is protected against unacceptable interruption when it is executed in the high-reliability mode.

4. The method (100) of any one of the preceding claims, wherein the safety-critical function (210) is separated into a first non-safety-critical sub-function (211) for preparation and/or configuration, and a second safety-critical sub-function (212) for execution in high reliability mode, and wherein the method (100) further comprises:
executing the first sub-function (211) for generation of an input for the second sub-function (212);
checking if the input to be used for the second sub-function (212) is valid;
switching into high-reliability mode if the input is valid; and
executing the second sub-function (212) in the high-reliability mode using the input.

5. The method (100) of any one of the preceding claims, wherein the data processing circuit (320) is configured for the use in a control circuit for a vehicle.

6. The method (100) of any one of the preceding claims, wherein the data processing circuit (320) is configured for the use in an engine control system and/or an x-by-wire system.

7. A computer program comprising instructions which, when the computer program is executed by a computer, cause the computer to carry out the method (100) of any one of the claims 1 to 6.

8. A computer-readable data carrier having stored thereon the computer program of claim 7.

9. An apparatus (300) comprising:
one or more interfaces (310) for communication; and
a data processing circuit (320) configured to execute a method (100) according to any one of the claims 1 to 6.

10. The apparatus (300) of claim 9, wherein the one or more interfaces (310) and/or data processing circuit comprise/s dedicated hardware resources for a safety-critical-function (210).

11. The apparatus (300) of claim 10, wherein the interfaces (310) comprise one or more dedicated interfaces for the safety-critical-function (210), and/or wherein the data processing circuit (320) comprises one or more dedicated processing cores, buffers, and/or memory devices for the safety-critical-function (210).

12. A vehicle comprising an apparatus (300) according to any one of the claims 9 to 11.
